# EUROPÄISCHE PATENTANMELDUNG

(11) **EP 1 187 300 A1**
(43) Veröffentlichungstag der Anmeldung: **13.03.2002**
(21) Anmeldenummer: 00118831.7
(22) Anmeldetag: 31.08.2000
(51) Int. Cl.: H02K 13/00, H02K 3/38, H01R 39/14

(54) **Kommutatormotor und Verfahren zu dessen Herstellung**

(71) Anmelder: SIEMENS AKTIENGESELLSCHAFT, 80333 München (DE)
(72) Erfinder: Zaps, Klaus, 97332 Volkach (DE)

(57) **Zusammenfassung**

Zur Vermeidung von Spannungsrissen in seiner Trägermasse (1.5) ist der Kommutator (1) nur in leichtem Preßsitz auf die Rotorwelle (4) bis zur axialen Anlage gegen eine, vorzugsweise mit einer rotorkernseitigen Isolierendscheibe (3) einstückige, die Rotorwelle umfassende Isolierhülse (2) aufgedrückt und gegen ein tangentiales Verdrehen dadurch gesichert, dass die Isolierhülse (2), insbesondere durch Quetschverformung beim Gegendrücken des Kommutators, kommutatorseitige Abstützstege (1.2) unterhalb der Kommutatorhaken (1.1) im Sinne einer axialen und insbesondere tangentialen Lagefixierung relativ zu der Rotorwelle (4) formschlüssig umfasst.

## Beschreibung

Die Erfindung betrifft einen Kommutatormotor gemäß Patentanspruch 1 sowie ein Verfahren zur Herstellung eines solchen Kommutatormotors gemäß Patentanspruch 8.

Bei Kommutatormotoren vorgenannter Art mit einem mit einer Rotorwicklung versehenen Rotorkern wird beim, vorzugsweise automatisierten, Einwickeln der Wicklung in Nuten des Rotorkerns der Wicklungsdraht in Abhängigkeit von der jeweiligen Wicklungsauslegung und davon abhängigen Wicklungsschritten nach dem Verlassen einer Nut des Rotorkerns, insbesondere von deren Achs- und/oder Radialrichtung, abgewinkelt zur umschlingenden Kontaktierung mit einem Kommutatorhaken an einer rotorkernseitigen Stirnseite des bestromenden Kommutators hin und wieder zur nächsten wicklungsschrittgemäßen Nut zurückgeführt; dabei wirken tangentiale sowie axiale sowie radiale Zugbelastungen auf den die Kommutatorlamellen mit ihren Kommutatorhaken aufnehmenden, auf die Rotorwelle aufgesteckten Kommutator; zur hinreichenden axialen und insbesonderen tangentialen Lagefixierung des Kommutators bedarf es eines entsprechenden, die Aufdrückkraft des Kommutators auf der Rotorwelle bestimmenden Preßsitzes, der durch eine entsprechend starke Überschneidung zwischen Innendurchmesser der Rotorwellen-Bohrung des Kommutators einerseits und Außendurchmesser der Rotorwelle andererseits erreichbar ist.

Insbesondere bei Kommutatoren mit kleinerem Außendurchmesser, wie sie z.B. von motorischen Antrieben für Sitzverstellungen, Fensterhebern bzw. Schiebedächern in Kraftfahrzeugen zum Einsatz kommen, besteht die Gefahr von Rissbildungen durch Überbeanspruchung der die Kommutatorlamellen aufnehmenden Trägermasse. Dies führt zur Lockerung des Kommutators auf der Rotorwelle und/oder zu elektrischen Isolationsfehlern.

Gemäß Aufgabe vorliegender Erfindung soll mit einfachen Mitteln, insbesondere bei Kommutator-Kleinmotoren, ein gegenüber axialen und insbesondere tangentialen Zugbelastungen sicherer Festsitz des Kommutators auf der Rotorwelle ohne übermäßige Belastung der Lamellen-Trägermasse gewährleistet werden können.

Die Lösung dieser Aufgabe gelingt erfindungsgemäß durch einen Kommutatormotor gemäß Patentanspruch 1 bzw. durch ein Verfahren zu dessen Herstellung gemäß Anspruch 8; vorteilhafte Ausgestaltungen des Kommutatormotors sind Gegenstand der Ansprüche 2-7.

Mit der erfindungsgemäßen stirnseitigen Verkrallung ist neben der axialen Lagefixierung aufgrund einer Festsitzhalterung der Isolierhülse relativ zu der Rotorwelle und insbesondere aufgrund der Festsitzhalterung des Rotorkerns bei mit der Abstandshülse verbundener und relativ zum Rotorkern bei der Bewicklung fixierter Isolierendscheibe durch die formschlüssige Umgreifung der Abstützstege durch die Abstandshülse zumindest eine so weit gehende tangentiale Lagefixierung des derart angekoppelten Kommutators möglich, dass für dessen Fixierung zur Rotorwelle ein von Überbelastungen freier Preßsitz genügt.

Eine zur Einstellung eines Axialspiels zwischen Kommutator und Rotor in ihrer axialen Länge stauchfaltbare Kunststoff-Isolierhülse ist durch die EP 0 260 570 B1 an sich bekannt. Eine stirnseitige Verkrall-Verformung im Sinne vorliegender Erfindung und zum Zwecke einer Verdrehsicherung des Kommutators ist dort nicht angesprochen.

Die Isolierhülse besteht vorzugsweise aus Kunststoff, der einer hohen Druckbelastung aussetzbar ist, sodass auch ohne Anbindung an die Isolierendscheibe, ohne Oberflächenschaden der Rotorwelle die Isolierhülse im Preßsitz auf die Rotorwelle aufdrückbar ist; bei Ankopplung an eine Isolierendscheibe kann die tangentiale Sicherung der Isolierhülse durch die bei Einbringung der Wicklung selbsttätige entsprechende Lagefixierung der Isolierendscheibe relativ zum Rotorkern erreicht werden, wobei dann die Isolierhülse nur noch im Sinne einer Übertragung dieser tangentialen Sicherung von der Isolierendscheibe zu dem Kommutator ausgelegt werden braucht.

In vorteilhafter Weise ist die Isolierhülse an ihrer Stirnseite erst mit dem Andrücken gegen die Abstützstege des Kommutators im Sinne einer tangential lagefixierenden formschlüssigen Umklammerung quetschverformbar; dadurch ist trotz gegebenenfalls unterschiedlicher Zahl und Ausbildung der Kommutatorhaken eines Kommutators eine einheitliche Universal-Isolierhülse einsetzbar, die erst mit dem Aufdrücken entsprechend der jeweiligen Kommutator-Ausführung individuell über ihren stirnseitigen Rand bei ansonsten, insbesondere axialer, Formkonstanz konstruiert ist.

Die Erfindung sowie weitere vorteilhafte Ausgestaltungen der Erfindung werden im folgenden anhand schematischer Ausführungsbeispiele in der Zeichnung näher erläutert; darin zeigen:
- FIG 1: zeigt in perspektivischer Explosionsdarstellung eine Rotorwelle mit darauf in leichtem Preßsitz aufdrückbarem, noch nicht an eine Rotorwicklung angeschlossenem, Kommutator und mit fixierter Isolierendscheibe mit einstückiger Isolierhülse in einer Vormontagestellung mit noch nicht im Sinne einer Umklammerung der Abstützstege quetschverformter kommutatorseitiger Stirnseite;
- FIG 2: die Isolierendscheibe und die Isolierhülse in ihrer Montageendstellung mit tangentialer Umklammerung und axialer Anlage der Abstützstege durch entsprechende Stauchverformung der kommutatorseitigen Stirnseite der Isolierhülse;
- FIG 3: in axialem Schnitt die Isolierscheibe mit einstückiger Isolierhülse gemäß FIG 2 in ihrer Montageendstellung relativ zu dem Kommutator;
- FIG 4: die kommutatorabgewandte stirnseitige Draufsicht auf die Anordnung gemäß FIG 3;
- FIG 5: eine bekannte, mit einer Rotorwicklung versehene, Rotoranordnung mit einer Isolierendscheibe mit einstückiger, durch Andruck der Kommutators in ihrer axialen Gesamtlänge bei unveränderter Stirnseite stauchverformter Isolierhülse.

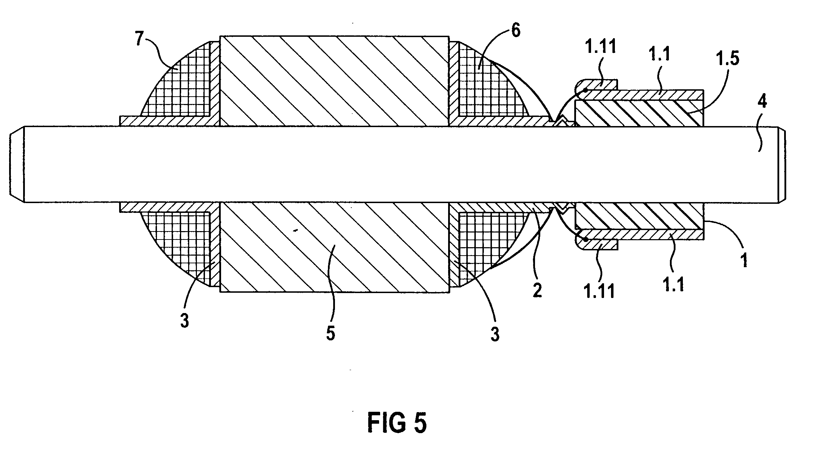

FIG 5 zeigt eine durch die EP 0 260 570 B1 bekannte Rotoranordnung mit auf einer Rotorwelle 2 fixiertem Rotorkern 5 mit darin eingebrachter Rotorwicklung, von der die stirnseitigen Wickelköpfe 6;7 sichtbar sind. Zur Bestromung der Rotorwicklung ist diese, an Kommutatorhaken 1.11 eines auf die Rotorwelle 4 axial aufgedrückten Kommutators 1 angeschlossen. Die Kommutatorhaken 1.11 sind endseitige Teile von, in einer Trägermasse 1.5 verankerten, Kommutatorlamellen 1.1, die in bekannter, hier nicht gezeigter Art von Bürsten beschliffen werden.

Zur elektrischen Isolierung der Wickelköpfe 6;7 gegenüber den Stirnseiten des Rotorkerns 5 und gegenüber der Rotorwelle 4 radial unterhalb der Wickelköpfe sind Isoierendscheiben 3;3 mit in vorteilhafter Weise mit diesen einstückigen Isoierhülsen 2;2 vorgesehen, von denen zumindest die rechte derart unter axialer Faltung in ihrer axialen Länge stauchbar ist, dass sie sich dem Aufdrückabstand des Kommutators relativ zum Rotorkern anpassen und für jedes Abstandsmaß eine Isolierung zur Rotorwelle gewährleisten kann.

Von den Wicklungsverbindungen zwischen der Rotorwicklung und dem Kommutator 1 sind nur die Anschlüsse zu zwei Kommutatorhaken 1.11 gezeigt. Aufgrund der hier angenommenen Backside-Wickeltechnik, ist ein aus einer Nut des Rotorkerns 5 herausgeführter Wicklungsdraht zu einem Kommutatorhaken gewickelt, der einer etwa um 180° am Umfang des Rotorkerns 5 versetzten Nut gegenüberliegt; dadurch entstehen tangentiale Zugbelastungen auf den Kommutator 1, der entsprechend gegen ein ungewolltes Verdrehen relativ zu der Rotorwelle 4 gesichert sein muss, was im bekannten Fall durch einen hinreichend starken Preßsitz zwischen Kommutator 1 und Rotorwelle 4 mit entsprechender Überschneidung des Innendurchmessers der Wellenbohrung des Kommutators 1 einerseits bzw. des Aussendurchmessers der Rotorwelle 4 andererseits erreicht wird.

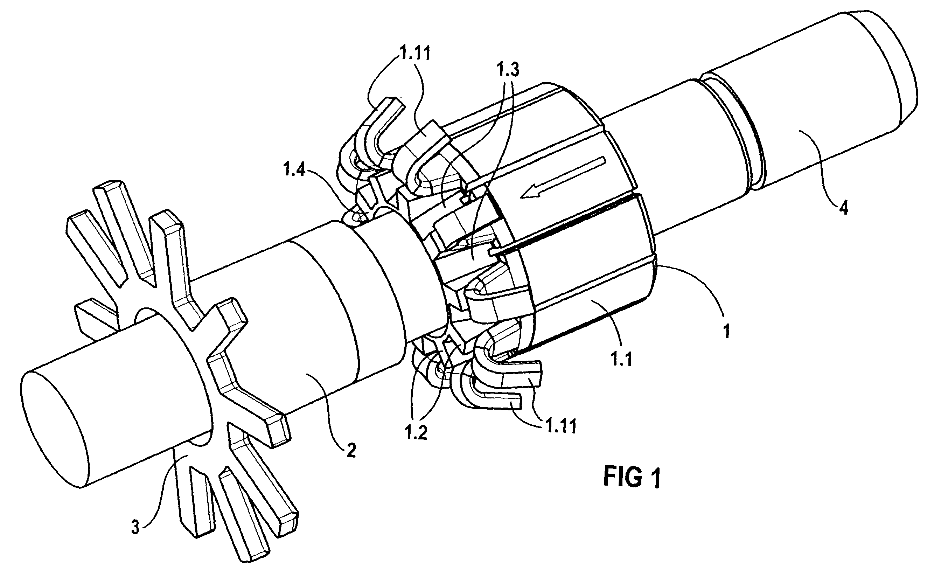

Erfindungsgemäß kann auf derartige Belastungen durch einen übermäßigen Preßsitz zwischen dem Kommutator 1 und der Rotorwelle 4 gemäß FIG 1-4 dadurch verzichtet werden, dass einerseits die Isolierhülse 2 entweder selbst oder über die Isolierendscheibe 3 und den Rotorkern 5 verdrehsicher mit der Rotorwelle 4 verbunden ist und andererseits durch die stirnseitige formschlüssige Umklammerung der kommutatorseitigen Abstützstege 1.2 der Kommutator 1 über die Isolierhülse 2 unmittelbar oder mittelbar verdrehsicher und gegebenenfalls axial lagefixiert gehalten werden kann.

Derartige radial und axial vorstehende und in Umfangsrichtung zueinander stehende Abstützungsstege 1.2 radial unterhalb der Kommutatorhaken 1.11 an den rotorkernseitigen Enden der Kommutatorlamellen 1.1 sind z.B. einstückiger Bestandteil der die Kommutatorlamellen 1.1 verankernden Trägermasse 1.5, über die der Kommutator 1 auf die Rotorwelle 4 aufgedrückt ist. Tangential zwischen den Abstützstegen 1.2 verbleiben Freiräume zur Zuführung von Werkzeugen zur Freistanzung der Isoliernuten zwischen den aus einem in der Trägermasse 1.5 zunächst verankerten Kupfervollrohr; die Abstützstege 1.2 sind tangential seitlich durch radial zurückgesetzte innere axiale Anlaufschrägen 1.3 und gegebenenfalls durch einen radial inneren gemeinsamen Anlagebund 1.4 verbunden.

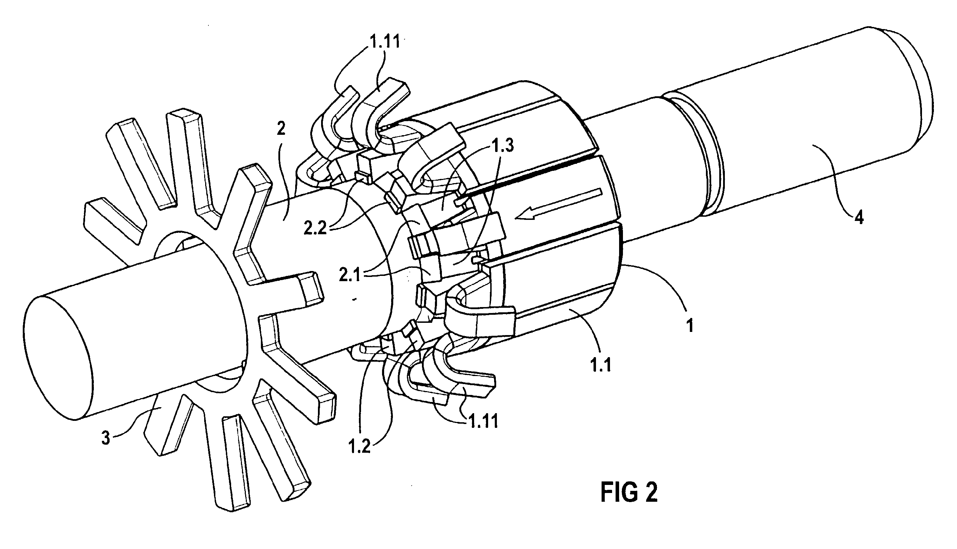

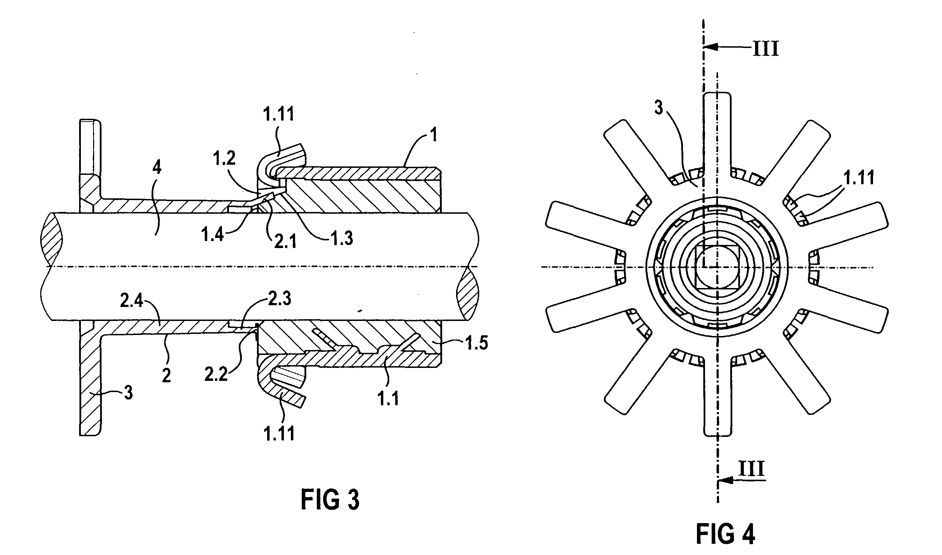

Die erfindungsgemäße seitliche Umklammerung der Abstützstege 1.2 durch entsprechende Ausformungen an der kommutatorseitigen Stirnseite der Isolierhülse 2 sind aus FIG 2 und FIG 3 ersichtlich. Der stirnseitige Rand der Isolierhülse 2 ist im Maße der tangentialen Breite der Absützstege 1.2 geschlitzt und seitlich mit ersten Lappen 2.1 entlang der Anlaufschrägen 1.3 zwischen den Abstützstegen 1.2 zwischengelegt und mit radialen hochgewölbten zweiten Lappen 2.2 an den axialen Stirnseiten der Absützstege 1.2 hochgelegt.

Nach einer vorteilhaften Ausgestaltung der Erfindung ist die Isolierhülse 2 nicht im Sinne einer Umklammerung der Abstützstege 1.2 vorgeformt, sondern erst beim entsprechenden Weiter- bzw. Andrücken des Kommutators 1 gegen die zumindest gemäß FIG 1 in einer Vormontagestellung noch unverformte Stirnseite der Isolierhülse 2 im Sinne der Schlitzung und Lappenausbildung quetschgeformt.

Zweckmäßigerweise ist ein derartige Quetschverformung dadurch unterstützt, dass die Isolierhülse 2 - wie aus dem Axialschnitt gemäß FIG 3 ersichtlich - im Bereich ihrer verformbaren Stirnseite einen reduzierten ersten Wandstärkenbereich 2.3 im Vergleich zum übrigen zweiten Wandstärkenbereich 2.4 aufweist; der reduzierte zweite Wandstärkenbereich 2.3 ist durch einen vergrößerten radialen Innendurchmesser im Sinne eines zu der Rotorwelle 4 beabstandeten endseitigen Stirnbereichs ausgebildet, sodass trotz des die Abstützstege 1.2 und die Anlaufschrägen 1.3 in Umfangsrichtung verbindenen umlaufenden Bundes 1.4 ein sicheres Anlaufen- bzw. Hochlaufen mit Quetschformen und Anlegen der ersten Lappen bzw. zweiten Lappen mit zwischenliegender Schlitzung gewährleistet ist.

Ein Verfahren zur Herstellung eines derartigen Kommutatormotors mit erfindungsgemäßer Verdreh-Sicherung des Kommutators durch eine Isolierendscheibe bzw. eine Isolierhülse ist gekennzeichnet durch folgende aufeinanderfolgende Verfahrensschritte:
- Aufstecken der, gegebenenfalls mit der Isolierendscheibe kombinierten, Abstandshülse auf das kommutatorseitige Ende der Rotorwelle bis zum Anschlag gegen den auf der Rotorwelle gehalterten Rotorkern;
- Aufstecken des Kommutatormotors auf die Rotorwelle, vorzugsweise im leichten Preßsitz, bis zur Anlage gegen die kommutatorseitige Stirnseite der Abstandshülse;
- Weiterdrücken des Kommutators mit gleichzeitiger Schlitzung und bleibender Stauchverformung des kommutatorseitigen Stirnbereichs der Abstandshülse im Sinne einer formschlüssigen, tangential fixierenden Umfassung der Abstützstege;
- Bewickeln des Rotors mit gleichzeitiger Umschlingungs-Kontaktierung der Kommutatorhaken.

Erfindungsgemäß ist also zur Vermeidung von Spannungsrissen in seiner Trägermasse 1.5 der Kommutator 1 nur in leichtem Preßsitz auf die Rotorwelle 4 bis zur axialen Anlage gegen eine, vorzugsweise mit einer rotorkernseitigen Isolierendscheibe 3 einstückige, die Rotorwelle 4 umfassende Isolierhülse 2 aufgedrückt und gegen ein tangentiales Verdrehen und gegebenenfalls axiales Verschieben dadurch gesichert, dass die Isolierhülse 2, insbesondere durch Quetschverformung beim Gegendrücken des Kommutators, kommutatorseitige Abstützstege 1.2 unterhalb der Kommutatorhaken 1.1 im Sinne einer insbesondere tangentialen und gegebenenfalls axialen Lagefixierung relativ zu der Rotorwelle 4 formschlüssig umfasst.

## Patentansprüche

1. Kommutatormotor
- mit einer die Rotorwelle (4) des Rotors umfassenden Isolierhülse (2), insbesondere Kunststoff-Isolierhülse, zwischen der kommutatorseitigen Stirnseite eines mit einer Rotorwicklung bewickelbaren Rotorkerns (5) und der gegenüberliegenden Stirnseite eines über Kommutatorhaken (1.11) am Außenrand dieser Stirnseite mit der Rotorwicklung kontaktierbaren Kommutators (1);
- mit unterhalb der Kommutatorhaken (1.11) axial und radial vorstehenden, tangential beabstandeten Abstützstegen (1.2) für die Kommutatorhaken (1.11), insbesondere bei deren Druckkontaktschweißung nach dem Umwickeln mit der Rotorwicklung;
- mit derart gegen die Stirnseite des Kommutators (1) anliegender Isolierhülse (2), dass sie im Bereich der Abstützstege (1.2) axial endseitig geschlitzt diese im Sinne zumindest einer tangentialen Fixierung formschlüssig umfasst.

2. Kommutatormotor nach Anspruch 1
- mit einem durch axialen Andruck der Isolierhülse (2) gegen die Stirnseite des Kommutators (1) zumindest über einen Teilendbereich bleibend quetsch- bzw. stauchverformten endseitigen Stirnbereich (2.1) der Isolierhülse (2) im Sinne der tangentialen Umfassung der Abstützstege (1.2).

3. Kommutatormotor nach Anspruch 2
- mit einer verringerten Wandstärke der Isolierhülse (2) in einem kommutatorseitigen, für die Umfassung der Abstützstege (1.2) vorgesehenen endseitigen ersten Wandstärkenbereich (2.3) im Vergleich zu ihrem übrigen, die Rotorwelle (2) umfassenden zweiten Wandstärkenbereich (2.4).

4. Kommutatormotor nach Anspruch 3
- mit einer Bildung des verringerten ersten Wandstärkenbereichs (2.3) durch einen vergrößerten radialen Innendurchmesser im Sinne eines zu der Rotorwelle (4) beabstandeten endseitigen Stirnbereichs der Isolierhülse (2).

5. Kommutatormotor nach zumindest einem der Ansprüche 1-4
- mit zumindest einer die kommutatorseitige Stirnseite des bewickelbaren Rotorkerns (5) abdeckenden Isolierendscheibe (3), insbesondere Kusntstoff-Isolierendscheibe;
- mit einer Zusammenfassung der Isolierhülse (2) und der Isolierendscheibe (3) zu einem einstückigen Bauteil.

6. Kommutatormotor nach zumindest einem der Ansprüche 1-5
- mit einer auch im Sinne einer axialen formschlüssigen Anlage gegen die Stirnseite des Kommutators (1) aus gebildeter Isolierhülse (2).

7. Kommutatormotor nach zumindest einem der Ansprüche 1-6 mit einer Bemessung des für die Aufnahme der Rotorwelle (4) vorgesehenen Bohrungsdurchmessers des Kommutators (1) im Sinne eines leichten Preßsitzes.

8. Verfahren zur Herstellung eines Kommutatormotors nach zumindest einem der Ansprüche 1-7 mit folgenden Verfahrensschritten:
- Aufstecken der, gegebenenfalls mit der Isolierendscheibe kombinierten, Abstandshülse auf das kommutatorseitige Ende der Rotorwelle bis zum Anschlag gegen den auf der Rotorwelle gehalterten Rotorkern;
- Aufstecken des Kommutatormotors auf die Rotorwelle, vorzugsweise im leichten Preßsitz, bis zur Anlage gegen die kommutatorseitige Stirnseite der Abstandshülse;
- Weiterdrücken des Kommutators mit gleichzeitiger Schlitzung und bleibender Stauchverformung des kommutatorseitigen Stirnbereichs der Abstandshülse im Sinne einer formschlüssigen, tangential und gegebenenfalls axial formschlüssig fixierenden Umfassung der Abstützstege;
- Bewickeln des Rotors mit gleichzeitiger Umschlingungs-Kontaktierung der Kommutatorhaken.
